# EUROPEAN PATENT APPLICATION

(11) **EP 4 775 388 A1**
(43) Date of publication of application: **15.07.2026**
(21) Application number: 24862135.1
(22) Date of filing: 25.10.2024
(51) Int. Cl.: B31B 70/10

(54) **CUSHIONING SHEET MANUFACTURING MODULE AND PACKAGING BAG MANUFACTURING APPARATUS**

(30) Priority: 08.09.2023 CN 202311164505; 16.04.2024 CN 202410457007
(71) Applicant: Huizhou Beta Packtech Co., Ltd, Huizhou, Guangdong 516001 (CN); Beta (Shenzhen) Package Products Co., Ltd, Guangdong 518000 (CN)
(72) Inventor: YAN, Jinwei, Guangdong 516001 (CN)
(74) Representative: Lin Chien, Mon-Yin
(86) International application number: PCT/CN2024/127243
(87) International publication number: WO 2025/051297

(57) **Abstract**

A cushioning sheet manufacturing module for manufacturing cushioning sheets, the cushioning sheet manufacturing module (100) comprising: a first unwinding unit (10) for unwinding a first sheet (A1); a cushioning layer feeding layer (20) for unwinding a cushioning layer (B1), a glue for bonding being applied to the cushioning layer and/or the first sheet; a paper-laminating unit (30) for roll-clamping the first sheet and the cushioning layer so as to bond the first sheet to the cushioning layer; and a cutting unit (40), which is arranged at the front end of the paper-laminating unit in a feeding direction, and rolls and cuts the cushioning layer at intervals during feeding, wherein a cutting position is perpendicular to the feeding direction. According to a variable rate, the cushioning layer feeding unit reduces a feeding rate after cutting, so that an uncovered gap (S) is formed on the first sheet by the cut cushioning layers, and after a distance of the gap (S), the cushioning layer is fed synchronously with the first sheet and is connected thereto. Further disclosed is a cushioning sheet manufacturing apparatus (200). The cushioning sheet manufacturing module solves the technical problems of the manufacturing efficiency of existing cushioning sheets being low and it not being possible for manufacturing modules to be compatible with various different cushioning layer structures.

## Description

### TECHNICAL FIELD

The invention relates to the field of express logistics, in particular, to a buffer sheet manufacturing module and a packaging bag manufacturing device.

### BACKGROUND

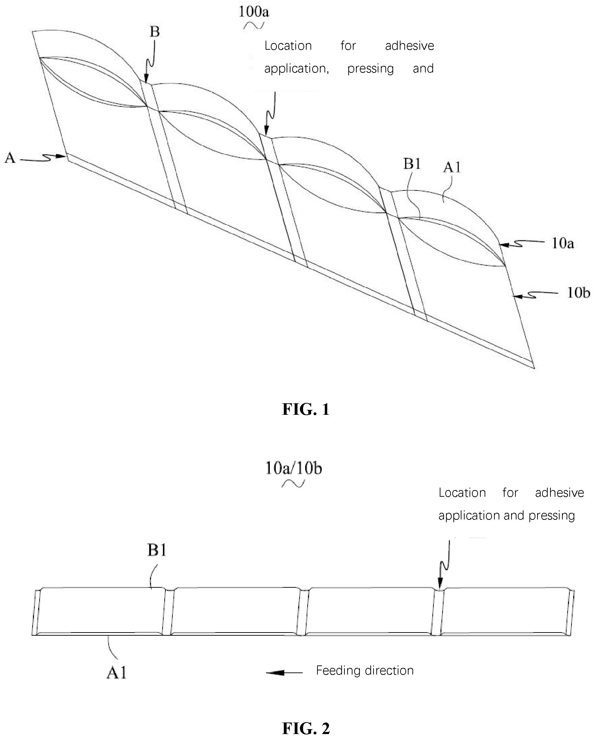

As shown in FIG.1, a buffer packaging bag 100a is made by folding a bottom A and sealing two sides B from a buffer sheet 10a, which has a buffering effect; or by using two buffer sheets 10a to bond the two sealing sides B with the bottom A. Bonding the bottom A can include bonding the bottoms A directly with each other from two buffer sheets 10a, or folding and bonding the bottom A form one of the two buffer sheets 10a. Folding and bonding the bottoms refers to overlapping two buffer sheets 10a, folding the bottom A of one buffer sheet 10a towards the bottom A of the other buffer sheet 10a and wrapping the same around the bottom A of the other buffer sheet 10a, and then bonding the folded part onto the other buffer sheet 10a.

As can be seen from the above manufacturing process of the buffer packaging bag 100a, the buffer sheets 10a/10b need to be manufactured first in the process of manufacturing the buffer packaging bag 100a. The manufacturing speed of the buffer sheet 10a directly affects the manufacturing efficiency of the packaging bag 100a.

With reference to FIGS. 1 and 2, as for the buffer sheet 10a itself, the buffer sheet 10a includes at least two layers, an outer layer A1 and a buffer layer B1; the outer layer A1 forms an outer wall of the packaging bag 100a after the layer is made into the packaging bag 100a, and the buffer layer B1 is located inside the outer wall and is also used for the packaging bag to contain objects. A common buffer sheet 10a can also include a three-layer structure, as shown in FIG. 3, namely an outer layer A1, a buffer layer B1 and an inner layer C1. The buffer layer B1 is located between the outer layer A1 and the inner layer C1. Here, the buffer layer B1 can be of a single-layer structure or a multi-layer structure. The entire buffer layer B1 or at least a portion of the buffer layer B1 needs to be bonded to the outer layer A1 or the inner layer C1 in order to fix the buffer layer B1.

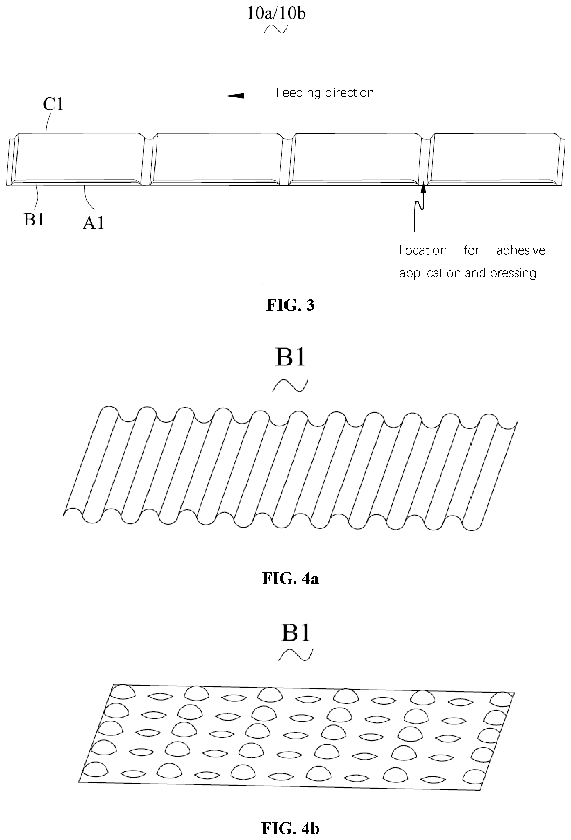

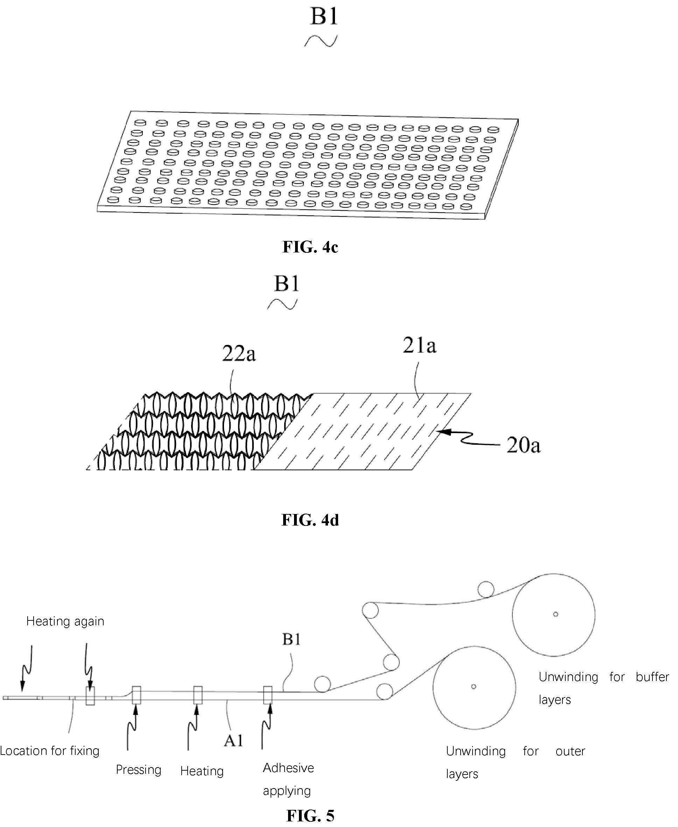

As shown in FIGS. 4a to 4d, the buffer sheet 10a has the following types depending on the different buffer layers B1:
1. the buffer layer has a wavy corrugated paper structure, as shown in FIG. 4a;
2. the buffer layer has a molded uneven structure, as shown in FIG. 4b;
3. the buffer layer is made of plastic bubble wrap, as shown in FIG. 4c;
4. the buffer layer is a three-dimensional hexagonal grid structure formed by stretching a slit paper, as shown in FIG. 4d. The slit paper 20a refers to the paper material with cuts 21a that create a separation, wherein a plurality of cuts 21a are arranged in rows and columns, with cuts 21a in the same row spaced apart from each other, and cuts 21a in adjacent rows staggered from each other. When the slit paper 20a is stretched, the paper will be twisted and stretched into a three-dimensional hexagonal opening 22a at a location of the cut 21a, causing the slit paper 20a to expand in a thickness direction, thereby having a buffering function.

Regardless of whether the existing buffer sheet has a two-layer or three-layer structure, or whether the buffer layer has a single or multiple layers, or whatever specific structure the buffer layer has, all or part of the buffer layer needs to be bonded onto the outer and/or inner layers during the manufacturing process. With reference to FIG. 5, when automated equipment is used to manufacture the buffer sheet 10a, the strip buffer layer B1 need to be fed while feeding the strip outer layer A1 and the strip inner layer, which are rolled materials; the buffer layer B1, the inner layer and the outer layer A1 are stacked in the vertical direction while being fed, and when the strip buffer layer B1 is bonded on the strip inner layer and/or the outer layer A1, the strip buffer sheet 10a is formed. However, the buffer layer B1 itself has a buffering function and a certain thickness. When the buffer layer B1 is bonded to the inner layer and/or the outer layer A1, in addition to applying the adhesive to a bonding location of the inner layer and/or the outer layer A1, it is also necessary to heat and press the buffer layer B1 and the inner/the outer layer at that location to ensure that the applied adhesive has maximum bonding strength and the buffer layer B1 is firmly fixed to the inner layer and/or the outer layer A1. Furthermore, during the pressing process, the buffer layer B1 needs to be pressed into a flat surface at the adhesive application location so that the buffer layer can fully contact and be fixed with the adhesive application surfaces of the outer and/or the inner layers.

When this manufacturing process is used to produce the buffer sheets, the heating and pressing processes are time-consuming; during pressing, it is necessary to maintain the process for a short period of time to press the buffer layer into a flat surface, and the applied adhesive also needs to be heated for a period of time. When the manufacturing equipment feeds in an intermittent and stepped mode, i.e., feeding for a period of time and then stopping, the heating and pressing structure heats and presses the areas where the buffer layer and inner/outer layer need to be bonded during the pause time; after heating and pressing are completed, feeding is continued for a period of time, and then the feeding is stopped, i.e., repeating this process; in addition, in some equipment, after heating and pressing, the buffer sheet needs to be heated again to dry and further cure the adhesive. In this type of manufacturing equipment, the feeding process is in a stopped state for a period of time, which reduces the overall production efficiency of the buffer sheet. The length of the buffer sheet produced by the manufacturing equipment with the stepped feeding mode is no more than 50m per minute.

On the other hand, when two strip buffer sheets are fed and stacked to make a buffer packaging bag, the two strip buffer sheets need to be bonded at intervals in the feeding direction, and the bonded locations are heated and pressed together, wherein the locations where the adhesive is applied at intervals form the two sides of the packaging bag after being manufactured and cut. In other words, when the buffer packaging bags are manufactured from the buffer sheets, heating and pressing are also required to fix the two buffer sheets together to form the buffer packaging bag, and the above technical problem of low manufacturing efficiency needs to be overcome.

Further, the time for heating and pressing is related to the structure of the buffer layer itself; the better the buffering effect of the buffer layer, the longer the time for heating and pressing will be, because the buffer layer is more difficult to press into a flat surface and requires a longer contact time with the adhesive to fix; for such manufacturing equipment, different stepped feeding methods need to be configured according to the production of different buffer layers of buffer sheets and buffer packaging bags, namely stepped feeding time and stepped stopping time, which makes it difficult to develop the buffer sheet and the buffer packaging bag manufacturing device that can be compatible with all structures.

### SUMMARY

An objective of the invention is to provide a buffer sheet manufacturing module, in order to solve the technical problems of low manufacturing efficiency of existing buffer sheets and the inability of the manufacturing modules to be compatible with various structures of different buffer layers.

The invention provides a buffer sheet manufacturing module, which includes:
a first unwinding unit for unwinding a first sheet and making the first sheet be continuously fed in an unwinding direction;
a buffer layer feeding unit for continuously feeding a buffer layer in the feeding direction, the buffer layer being located above the first sheet, the buffer layer and/or the first sheet being applied with an adhesive for bonding the first sheet and the buffer layer;
a paper pressing unit for rolling, pressing and holding the first sheet and the buffer layer at a location where the adhesive is applied on the first sheet and/or the buffer layer to bond to fix the first sheet and the buffer layer;
a cutting unit, disposed at a front end of the paper pressing unit in the feeding direction, the cutting unit rolling and cutting the buffer layer at intervals while feeding, a cutting location being perpendicular to the feeding direction;
wherein the buffer layer after cutting is separated into buffer units, and each of the buffer units forms a first end and a second end , each of the buffer units is sequentially fed to the paper pressing unit from the first end to the second end, and the plurality of buffer units are fixed to the first sheet by the paper pressing unit after being pressed and held;
the first unwinding unit is provided with a first feeding speed a, and the buffer layer feeding unit is provided with a varying feeding speed b; the varying feeding speed b comprises a second feeding speed b1 and a third feeding speed b2, the third feeding speed b2 is the same as the first feeding speed, and the second feeding speed b1 is less than the first feeding speed b;
an intervals S is formed between the first end of the buffer unit after cutting and the second end of the previous buffer unit after cutting; after the cutting unit cuts the buffer layer, the buffer layer feeding unit continuously feeds at the second feeding speed b1 that is less than the first feeding speed a until the interval S is reserved on the first sheet; after the first end of the buffer unit is fixed to the first sheet, the buffer layer feeding unit then feeds continuously and synchronously with the first sheet at the third feeding speed b2.

The invention further discloses a second buffer sheet manufacturing module, which includes:
a first unwinding unit for unwinding a first sheet and making the first sheet be continuously fed in an unwinding direction;
a third unwinding unit for unwinding a third sheet and continuously feeding the third sheet in an unwinding direction, the third sheet being provided with a plurality of pleats extending in the feeding direction;
a slit paper unwinding unit for unwinding a slit paper and continuously feeding the slit paper in the unwinding direction, the slit paper being located between the first sheet and the third sheet, wherein an adhesive is applied to a location of the slit paper relative to the third sheet, or the adhesive is applied to a location of the third sheet relative to the slit paper; the adhesive is positioned along both side edges of the feeding direction; the slit paper is provided with the adhesive relative to the first sheet, or the first sheet is provided with the adhesive relative to the slit paper at one side end in the feeding direction;
a paper pressing unit for rolling, pressing and holding a location of the first sheet and the slit paper where the adhesive is applied, so that the slit paper is connected to the third sheet at one side edge and the third sheet is connected to the slit paper at both side edges;
a cutting unit, disposed at a front end of the paper pressing unit in the feeding direction, the cutting unit rolling and cutting the slit paper at intervals while feeding, a cutting location being perpendicular to the feeding direction;
wherein for the slit paper after cutting, each of the buffer units forms a first end and a second end according to an order in which the buffer units are cut, each of the buffer units is sequentially fed to the paper pressing unit from the first end to the second end, and the paper pressing unit fixes both side edges of the slit paper to the first sheet; the interval S is formed on an area of the first sheet that is not covered with the slit paper and perpendicular to the feeding direction, a plurality of intervals S are arranged, and the plurality of intervals S are arranged at intervals with the feeding direction of the first sheet; after the first sheet is fixed with the slit paper, at least two slit papers after cutting are disposed between two adjacent intervals S;
the first unwinding unit is provided with a first feeding speed a, and the slit paper unwinding unit is provided with a varying feeding speed b, wherein the varying feeding speed b includes a second feeding speed b1, a third feeding speed b2 and a fourth feeding speed b3, the third feeding speed b2 being the same as the first feeding speed b, the second feeding speed b1 being less than the first feeding speed a, the fourth feeding speed b3 being greater than the first feeding speed b;
when the first end of the slit paper after cutting is located at an end location of the interval S, the slit paper unwinding unit feeds the slit paper at the third feeding speed b2, so that the slit paper and the first sheet are fed synchronously; when the second end of the slit paper after cutting is fed to a location between two adjacent intervals S, the slit paper unwinding unit feeds the slit paper at the fourth speed b3, and the first end of the slit paper fed at the fourth feeding speed b3 overlaps with the second end of the previous slit paper after cutting; after the slit papers overlap, the slit paper unwinding unit continues to feed the slit paper at the third feeding speed b2 until the second end of the next slit paper after cutting is located at a starting location of another adjacent interval S, and then the slit paper unwinding unit feeds the slit paper at the second feeding speed b1, so that the second end of the next slit paper is located at an end location of the interval S relative to the first sheet, and the slit paper unwinding unit feeds again the slit paper at the third feeding speed b2, thereby forming two partially overlapping slit papers in the two adjacent intervals S of the first sheet. when the first end of the previous buffer unit after cutting corresponds to an end location of the interval S on the first sheet during the feeding process, the slit paper unwinding unit feeds a slit paper at the third feeding speed b2, and the third unwinding unit also feeds the third sheet at the third feeding speed b2, so that the slit paper and the third sheet are fed synchronously with the first sheet; when the second end of the previous buffer unit after cutting is fed to a predetermined location between two adjacent intervals S, the slit paper unwinding unit feeds the slit paper at the fourth speed b3, the third unwinding unit feeds the third sheet at the fourth feeding speed b3, and the first end of the current buffer unit fed at the fourth feeding speed b3 overlaps with the second end of the previous buffer unit after cutting; after two adjacent buffer units overlap by a predetermined width, the slit paper unwinding unit continues to feed the slit paper at the third feeding speed b2, and the third unwinding unit feeds the third sheet at the third feeding speed b2, until the second end of the current buffer unit after cutting is located at a starting location of another adjacent interval S, and then the slit paper unwinding unit feeds the slit paper at the second feeding speed b1 and the third unwinding unit feeds the third sheet at the second feeding speed b1, so that the first end of the next buffer unit corresponds to the end location of the interval S on the first sheet during the feeding process, thereby forming two partially overlapping slit papers and the third sheet in the two adjacent intervals S of the first sheet.

The invention discloses a packaging bag manufacturing device, which includes two buffer sheet manufacturing modules, the two buffer sheet manufacturing modules being used for manufacturing buffer sheets; the buffer sheets manufactured by the two the buffer sheet manufacturing modules are a first sheet and a second sheet respectively, the first sheet and the second sheet being identical, and the first sheet and the second sheet being opposite to each other and fed synchronously;
a first bag-forming adhesive application unit for applying adhesive on a surface of the first sheet and/or the second sheet facing the other the second sheet or the first sheet, the positions where adhesive is applied by the first bag-forming adhesive application unit being arranged at intervals and perpendicular to the feeding direction, the positions where adhesive is applied by the first bag-forming adhesive application unit corresponding to the intervals S of the first sheet or the second sheet, and the buffer layer of the first sheet being opposite to the buffer layer of the second sheet;
a first bag-forming pressing unit for rolling and pressing the first sheet and the second sheet, and causing the first sheet and the second sheet to be pressed against each other at positions corresponding to the intervals S, thereby forming two side edges of the packaging bag.

The invention discloses another packaging bag manufacturing device, which includes two second buffer sheet manufacturing modules. The second packaging bag manufacturing device of the invention includes a second buffer sheet manufactured by the two second buffer sheet manufacturing modules. The second buffer sheet is fed synchronously in a manner that the second buffer sheet and the third sheet are opposite to each other, and the second buffer sheet and the third sheet are pressed and bonded together at the interval S.

The buffer sheet manufacturing module disclosed in the invention can be compatible with the manufacturing of various buffer layers with different structures, and no buffer layer is required when pressing and bonding at adjacent intervals S, which eliminates the need for the buffer layer to be flattened at the interval S, thus reducing the time required for pressing and heating; meanwhile, by adopting a continuous feeding method and using different feeding speeds to form the buffer layer, the overall production efficiency is greatly improved.

### DESCRIPYION OF THE DRAWINGS

FIGS. 1 to 5 are comparison diagrams of the prior art;

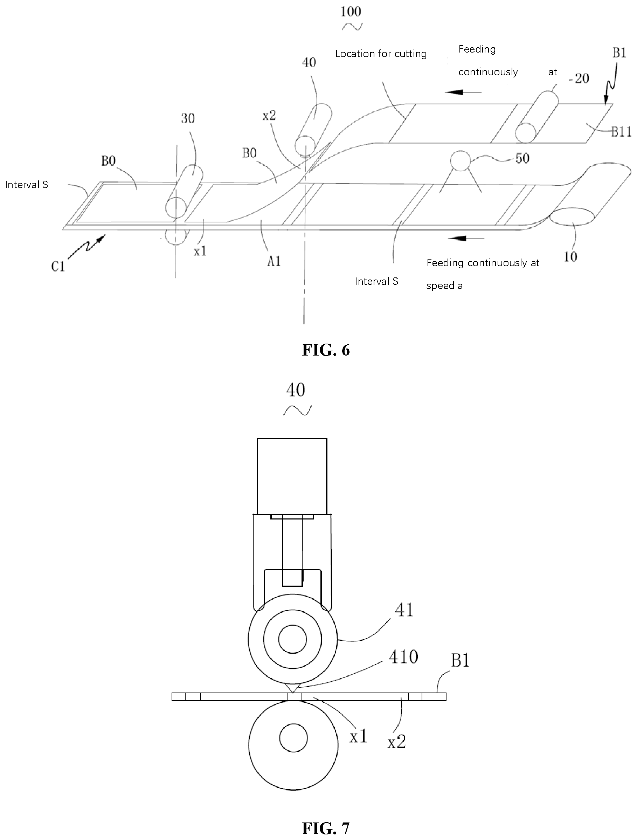

FIG. 6 is a diagram of a buffer sheet manufacturing module according to Embodiment One of the invention;
FIG. 7 is a structural diagram of a cutting unit according to the invention;

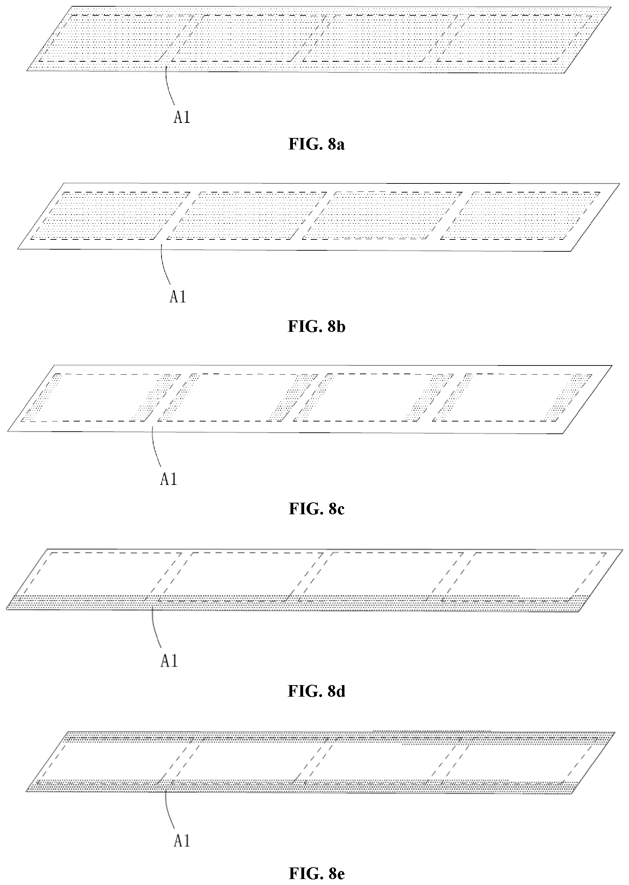

FIGS. 8a to 8e are diagrams of adhesive application locations on a first sheet or a buffer layer according to the invention;

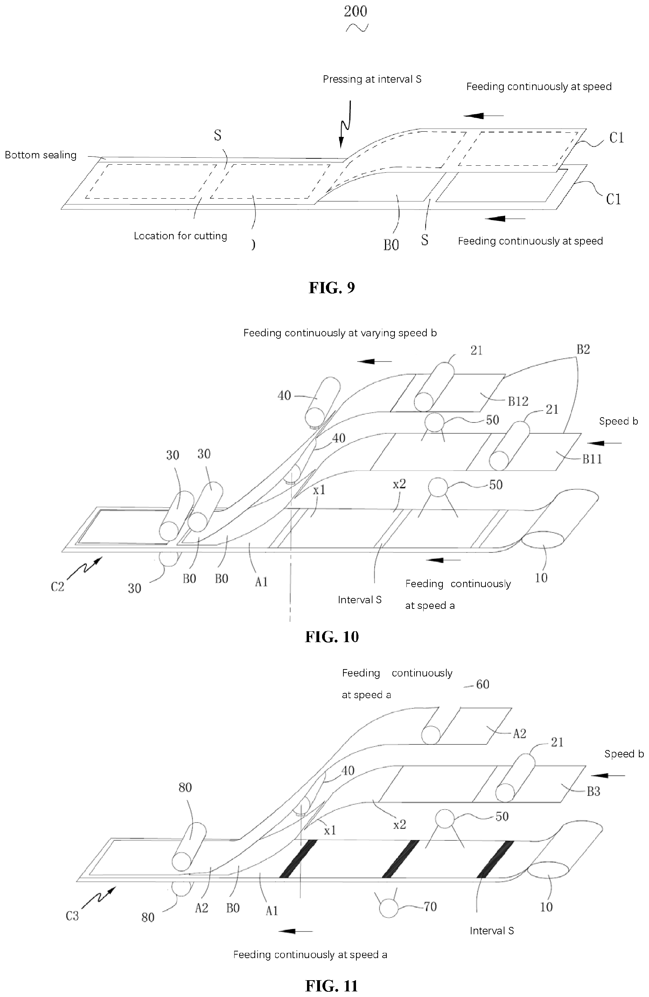

FIG. 9 is a diagram of manufacturing a packaging bag with the buffer sheet manufacturing module according to Embodiment One of the invention;
FIG. 10 is a diagram of the buffer sheet manufacturing module according to Embodiment Two of the invention;
FIG. 11 is a diagram of the buffer sheet manufacturing module according to Embodiment Three of the invention;

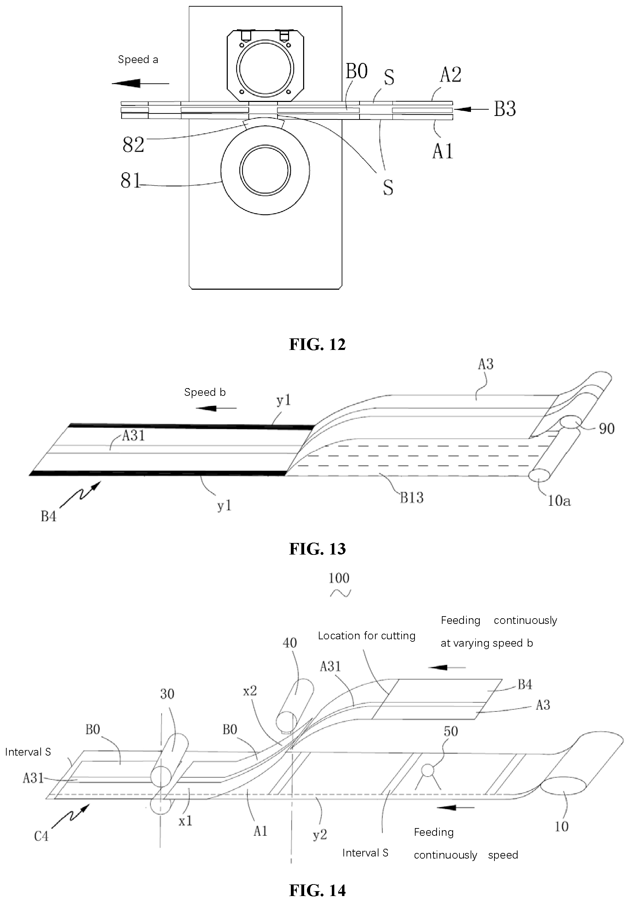

FIG. 12 is a structural diagram of a rolling and pressing unit according to the invention;
FIG. 13 is a structural diagram of a buffer layer according to Embodiment Four of the invention;
FIG. 14 is a diagram of the buffer sheet manufacturing module according to Embodiment Four of the invention;

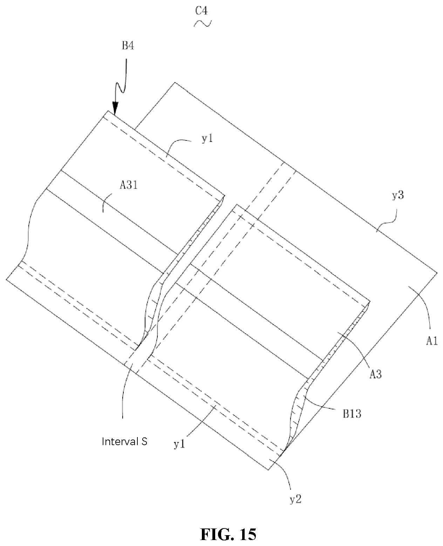

FIG. 15 is a structural diagram of a manufactured buffer sheet according to Embodiment Four of the invention;

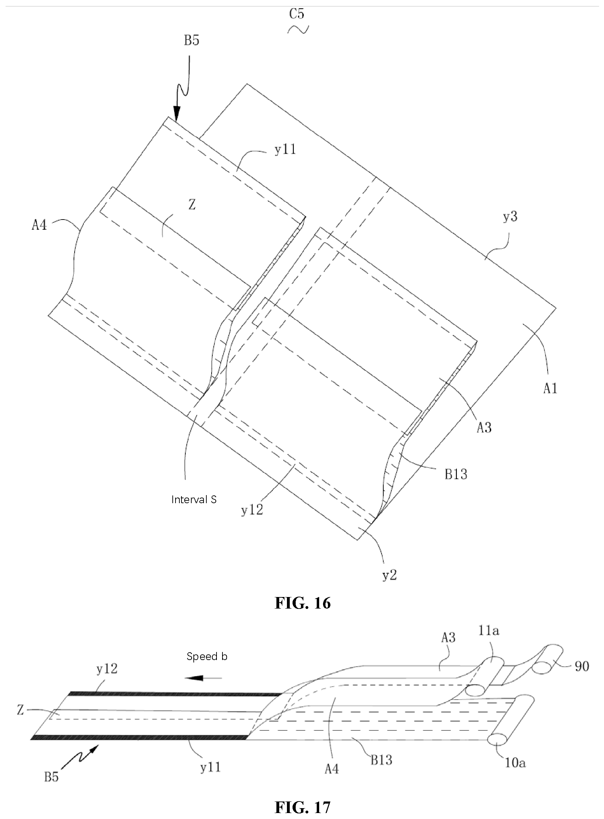

FIG. 16 is a structural diagram of the manufactured buffer sheet according to Embodiment Five of the invention;
FIG. 17 is a flow chart of manufacturing the buffer layer according to Embodiment Five of the invention;

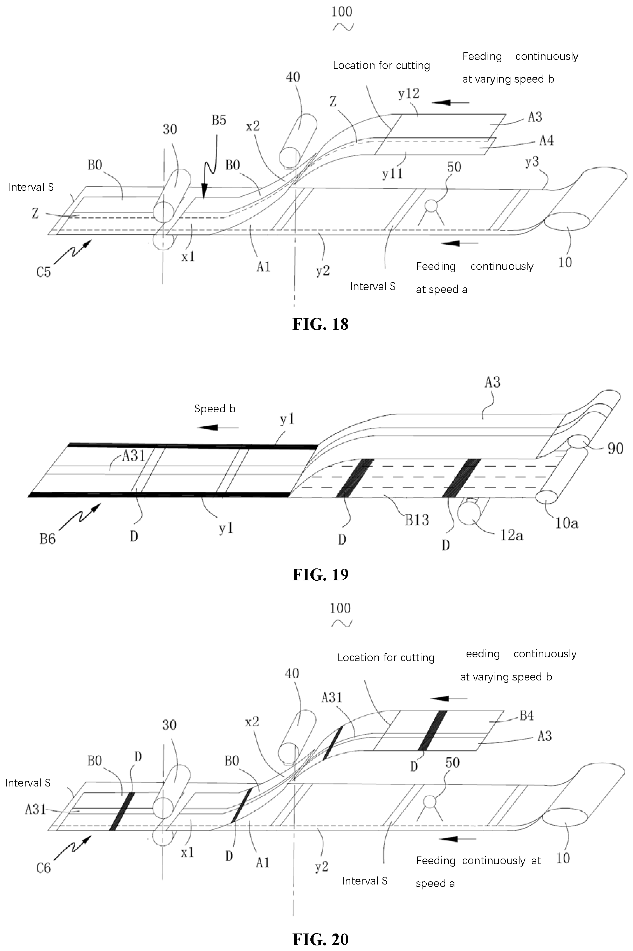

FIG. 18 is a diagram of the buffer sheet manufacturing module according to Embodiment Five of the invention;
FIG. 19 is a flow chart of manufacturing the buffer layer according to Embodiment Six of the invention;
FIG. 20 is a diagram of the buffer sheet manufacturing module according to Embodiment Six of the invention;

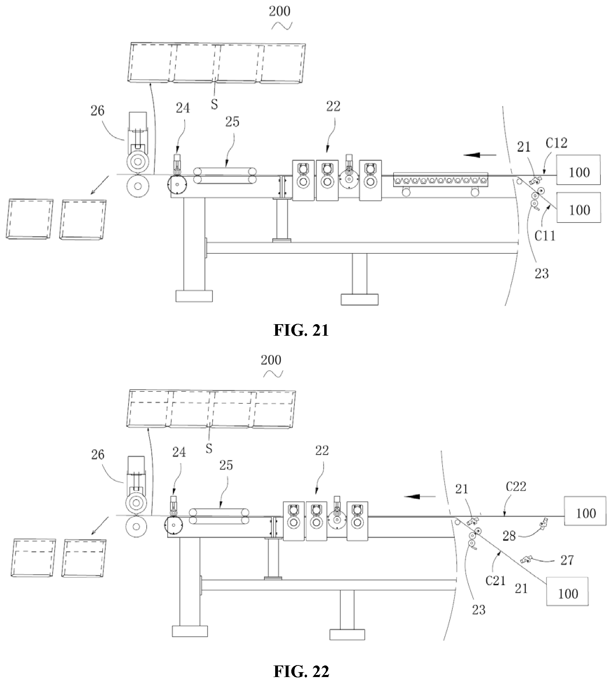

FIG. 21 is a structural diagram of a packaging bag manufacturing device according to Embodiment Seven of the invention;
FIG. 22 is a structural diagram of the packaging bag manufacturing device according to Embodiment Eight of the invention;

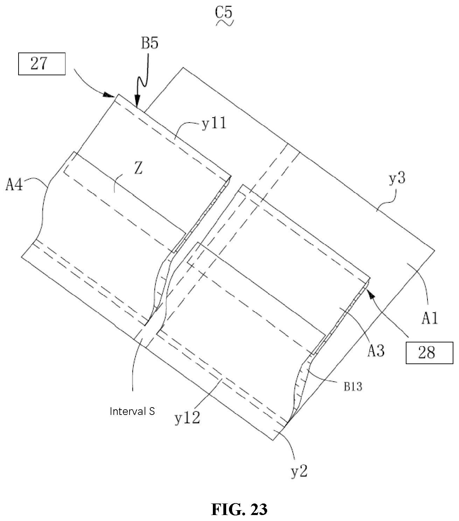

FIG. 23 is a diagram of the adhesive application locations of the buffer sheet according to Embodiment Eight of the invention;

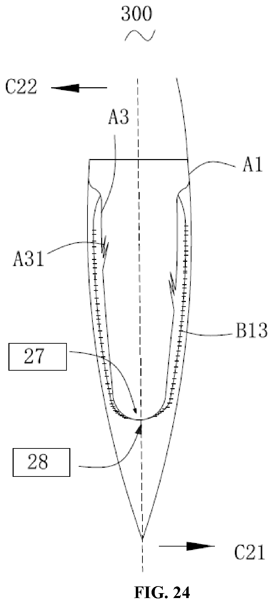

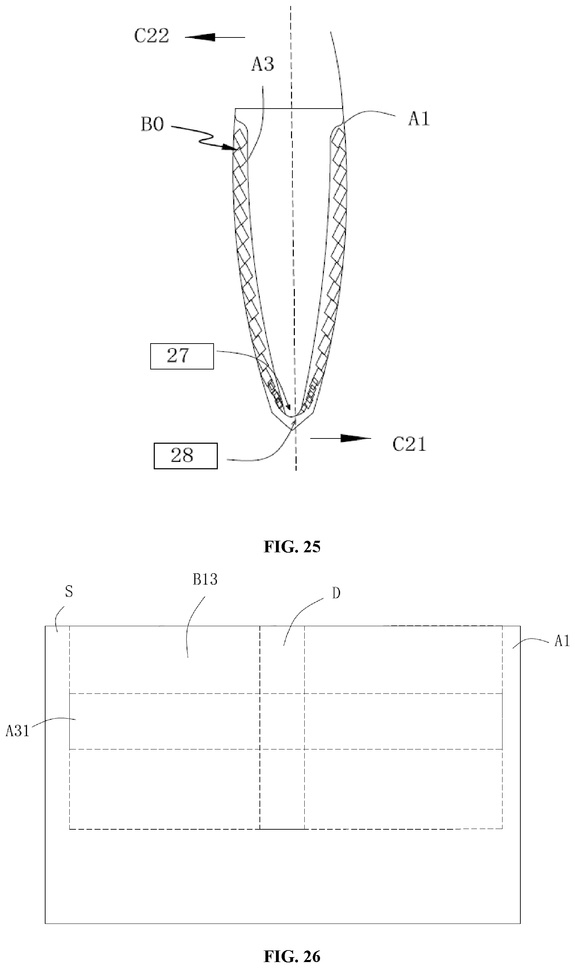

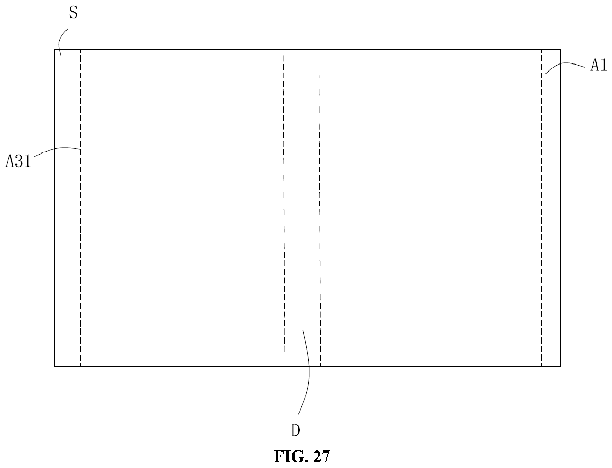

FIGS. 24 to 27 are diagrams of the packaging bags manufactured according to Embodiments Seven and Eight of the invention.

### DETAILED DESCRIPTION

The invention will be further described and illustrated below with reference to specific embodiments and the accompanying drawings.

### Embodiment One:

With reference to FIG. 6, the invention discloses a buffer sheet manufacturing module 100 for manufacturing a buffer sheet C1, which includes a first unwinding unit 10, a buffer layer feeding unit 20, a paper pressing unit 30 and a cutting unit 40.

The first unwinding unit 10 is used to unwind the first sheet A1 and continuously feed the first sheet in a feeding direction of the buffer sheet manufacturing module 100 formed after unwinding. In this application, "continuously feeding" refers to uninterrupted and continuous conveying or unwinding, which is different from stepped feeding. In this application, all sheet unwinding is carried out in the feeding direction.

The buffer layer feeding unit 20 is used to continuously feed the buffer layer B1 in the feeding direction. The buffer layer B1 is located on one side of a first sheet A1, i.e., the buffer layer B1 is located above the first sheet A1. One surface of the buffer layer B1 and/or the first sheet A1 facing the other first sheet A1 or the buffer layer B1 is applied with an adhesive for bonding the first sheet A1 and the buffer layer B1, wherein the adhesive for application may be applied before unwinding or during the feeding process of the first sheet A1 or the buffer layer B1, and the only requirement is that the adhesive may bond the first sheet A1 and the buffer layer B1 together, or at least a portion of the two may be bonded together without detaching. The paper pressing unit 30 is used to roll and hold the first sheet A1 and the buffer layer B1 at locations where the adhesive is applied on the first sheet A1 and/or the buffer layer B1 for bonding, thereby fixing the first sheet A1 and the buffer layer B1, wherein the paper pressing unit 30 also rolls continuously, and a rolling speed is the same as and synchronized with an unwinding speed of the first unwinding unit 10, so as to ensure that the first sheet A1 and the buffer layer B1 are completely fixed at adhesive application locations and there is no situation where the adhesive application location is not fixed.

The cutting unit 40 is disposed at a front end of the paper pressing unit 30 in the feeding direction, i.e., adjacent to one side of the first unwinding unit 10, and located between the paper pressing unit 30 and the buffer feeding unit 20, the cutting unit 40 rolling the cutting the buffer layer B1 at intervals while feeding at a location perpendicular to the feeding direction.

In the embodiment, the cutting at intervals may cut the buffer layer B1 into a plurality of independent buffer units B0, while the rolling cutting may cut the buffer layer B1 synchronously with the feeding process of the buffer layer B1, without affecting the feeding process, saving time and improving production efficiency.

As shown in FIG. 7, the cutting unit 40 includes a roller cutting wheel 41 and a roller cutting blade 410 disposed on a circumferential surface of the roller cutting wheel 41 and perpendicular to an end face of the roller cutting wheel 41. When the roller cutting wheel 41 rotates to the point where the roller cutting blade 410 contacts the buffer layer B, the roller cutting blade 410 cuts the buffer layer B at a location perpendicular to the feeding direction as the wheel rotates, thereby forming the buffer unit B0.

In combination of FIG. 6, in particular, after being cut, the buffer layer B1 is separated into the buffer units B0; each of the buffer units B0 forms a first end x1 and a second end x2 according to an order of cutting; the buffer units B0 are sequentially fed from the first end x1 to the second end x2 to the paper pressing unit 30, and are clamped and held together with the first sheet by the paper pressing unit 30 and fixed to the first sheet A1. The plurality of buffer units B0 are arranged sequentially in a single row, with the second end x2 of the previous buffer unit B0 adjacent to the first end x1 of the current buffer unit B0.

The first unwinding unit 10 is provided with a first feeding speed a; the buffer layer feeding unit 20 is provided with a varying feeding speed b, wherein the varying feeding speed b includes a second feeding speed b1 and a third feeding speed b2, the third feeding speed b2 is the same as the first feeding speed, and the second feeding speed b1 is less than the first feeding speed a;
An interval S is formed on the first sheet A1 between the first end x1 of the buffer unit B0 after cutting and the second end x2 of the previous buffer unit B0; when the cutting unit 40 cuts the buffer layer B1, the buffer layer feeding unit 20 starts feeding continuously at the second feeding speed b1, which is less than the first feeding speed a, until the buffer layer B1 leaves the interval S relative to the first sheet A1 and the first end x1 is fixed to the first sheet A1, and then, feeds continuously and synchronously with the first sheet at the third feeding speed b2; the buffer layer B1 is fed synchronously at the third feeding speed b2 until reaching the second end x2 of the buffer layer B1, and then, the cutting unit 40 rotates to a cutting location again to separate the buffer unit B0 after cutting; then, after passing through the paper pressing unit 30, the first end x1 and the second end x2 of the buffer unit B0 are fixed on the first sheet A1, and in this way the buffer layer feeding unit 20 feeds continuously at the second feeding speed b1 while reserving the interval S on the first sheet; then, continue feeding is performed according to the above feeding method to manufacture the buffer sheet C1.

As shown in FIG. 6, in the embodiment, the buffer layer B1 includes one layer of cushion B11, and a cross-section of the cushion B11 is of at least one of a wavy corrugated paper structure, an embossed structure, a plastic bubble wrap and a three-dimensional hexagonal grid structure after the slit paper is stretched.

In the embodiment, the first unwinding unit 10 continuously unwinds at a fixed feeding speed a, while the buffer layer B1 is fed at the varying speed b and cut at the reserved interval S with the cutting unit 40, thereby distributing the buffer units B0 at intervals on the first sheet 10 and feeding the same together with the first sheet 10 to the paper pressing unit 30; the buffer sheet C1 does not require heating and pressing between the first sheet 10 and the buffer layer B1, especially does not require pressing the buffer layer B1 into a planar structure, which saves time for heating and pressing; the buffer unit B0 after cutting only needs to be guided in the feeding direction and placed on the first sheet 10 to fix the buffer unit B0 on the first sheet.

As shown in FIG. 6, in the invention, the manufacturing module 100 includes a first adhesive application unit 50, the first adhesive application unit 50 is used to continuously apply the adhesive for bonding the first sheet to the buffer layer B to a surface of the buffer layer B1 and/or the first sheet A1 facing the other first sheet A1 or the buffer layer 50, and the first adhesive application unit 50 applies the adhesive at a location on the first sheet A1 or the buffer layer B1 and along at least one side of the feeding direction.

In the invention, when the first adhesive application unit 50 applies the adhesive, the adhesive is applied along the feeding direction, i.e., the part that is fed first is applied first and the part that is applied later is applied later, and the trajectory along which the adhesive is applied is along the feeding direction; the location where the adhesive is applied is located on at least one surface opposite to each other on the first sheet A1 or the buffer layer B1. In other words, the adhesive may be applied to the surface of the first sheet A1 facing the buffer layer B1, and/or the surface of the buffer layer B1 facing the first sheet A1. A range for adhesive application of "at least one side" includes any of the following:
the range covers the entire surface of the first sheet A1 or the buffer layer B1, as shown in FIG. 8a;
the range is the entire area of the surface of the first sheet A1 or the buffer layer B1 relative to the two adjacent intervals S, as shown in FIG. 8b;
the range is a portion of the surface of the first sheet A1 or the buffer layer B1 relative to the two adjacent intervals S, as shown in FIG. 8C;
the range is on one side of the first sheet A1 or the buffer layer B1 near the edge along the feeding direction, as shown in FIG. 8d;
the range is on both sides of the first sheet A1 or the buffer layer B1 near the edge along the feeding direction, as shown in FIG. 8e.

In the invention, the location for applying the adhesive needs to be reasonably selected and verified based on the structural characteristics of the cushion B11 in the buffer layer B1 and the feeding speed.

For example, when the cushion B11 is a plastic bubble wrap, since the plastic bubble wrap itself is relatively soft and has strong extensibility, the first adhesive application unit 50 may apply the adhesive according to the range A or the range B; then, due to the stretchability and flexibility of the plastic bubble wrap, it is easy to adhere between the two intervals S of the entire first sheet A1, without affecting the feeding speed, thus maximizing the feeding speed.

For example, when the cushion B11 is of a corrugated paper structure, due to the relatively high hardness of the corrugated paper and the wavy surface, it is not suitable to use the range A for adhesive application, and using the range A will inevitably reduce the feeding speed because the range is large; therefore, the adhesive may be applied using either the range C or the range E, and then applying less adhesive in this way may increase the feeding speed while only requiring the two sides of the corrugated paper structure to be fixed; after the two sides of the corrugated paper structure are fixed, the area in the middle of the two sides may maintain the integrity of the wavy shape as much as possible without reducing the buffering performance.

For example, when the cushion B11 is of a hexagonal grid structure, the adhesive may be applied according to the range C or the range D; the two sides of the hexagonal grid structure are fixed to the two ends of the buffer sheet in a transverse direction along the feeding direction or in a vertical direction perpendicular to the feeding direction, which then allows the middle part of the hexagonal grid structure to be free from being fixed to the first sheet A1 to result in better buffering performance; fixing only the two ends may further prevent the stretched hexagonal grid structure from springing back to the original state, thus improving the buffering performance of the hexagonal grid structure while also taking into account the feed speed.

As shown in FIG. 9, in particular, when using the buffer sheet C1 in the embodiment to manufacture the packaging bag 200, only two buffer sheet manufacturing modules 100 are needed to manufacture two buffer sheets C1. During the synchronous and continuous feeding of two buffer sheets C1, the interval S between the two buffer sheets C1 is aligned and fixed at the interval S, with a bottom edge sealed. At the end of the feeding process, the sheet is cut at the fixed interval S to form the packaging bag 200. The resulting packaging bag 200 does not have the buffer layer B1 or the buffer unit B0 on both sides, i.e., at the interval S. Therefore, when fixing at the side (interval S), a long time for pressing or heating waiting is not required, which may maximize production efficiency. In addition, during the pressing process, the entire area of the buffer layer B1 or the buffer unit B0 is not required to be pressed, and only the side (interval S) needs to be pressed without pressing the locations of the buffer layer B1 and the buffer unit B0, which may prevent damage or reduction of the buffering performance of the buffer layer B1 or the buffer unit B0, and prevent the problem of reduced thickness of the buffer unit B0 and reduced buffering performance due to excessive pressure.

### Embodiment Two

As shown in FIG. 10, the embodiment differs from Embodiment One in that the buffer layer B2 includes two layers of cushions (B11, B12), the two layers of cushions (B11, B12) being a cushion B11 and a cushion B12 respectively. In the embodiment, the buffer layer B2 may further include more than two layers of cushions (B11, B12). The cushions B1 and B2 include a cross-section of at least one of a wavy corrugated paper structure, an embossed structure, a plastic bubble wrap and a three-dimensional hexagonal grid structure after the slit paper is stretched.

In other words, the cushion B11 and the cushion B12 may be the same, for example, both being of the corrugated paper structures; the cushion B11 and the cushion B12 may further be different from each other, for example, the cushion B11 is of the corrugated paper structure, while the cushion B12 is of the plastic bubble wrap.

In the embodiment, the buffer layer B2 is provided with two layers of cushions B11 and B12; the manufacturing module 100 includes a plurality of cutting units 40 and a plurality of first adhesive application units 50; the buffer layer feeding unit 20 includes a plurality of cushion feeding units 21; the number of the cushion feeding units 21, the first adhesive application units 50 and the cutting units 40 is the same as that of the cushions (B11, B12), i.e., two, and each of the cushion feeding units 21 is used to feed one layer of cushion B11; at least one of the first adhesive application units 50 is used to continuously apply the adhesive to the surface of pad B11 on one side facing toward the other layer of cushion B12 at a location along at least one side in the feeding direction. In other words, applying the adhesive to at least one surface of the cushion B11 and the first sheet A1 opposite each other, and to at least one surface of the cushion B12 and the cushion B11 opposite each other enables the first sheet A1, the cushion B11 and the cushion B12 to be connected to each other. Each of the cutting units 40 is used to cut one layer of cushion B; the two layers of cushions B11 and B12 are stacked one on top of the other and fed continuously and synchronously at the varying feeding speed b; after cutting, the two cushion units BO are also stacked one on top of the other to form a multi-layer structure.

One layer of the cushion B11 is connected to the adjacent other layer of the cushion B12 at a location where the adhesive is continuously applied after being cut.

In the embodiment, the location where the adhesive is continuously applied is the same as any one of the ranges A-E in Embodiment One, and selection is required to be made according to the material of the cushion (B11, B12) and the feeding speed. The difference is that when the cushions (B11, B12) have two layers, at least one first adhesive application unit 50 applies the adhesive to at least one of the opposing surfaces of the two cushions (B11, B12) so that the two cushions (B11, B12) are connected to each other and fixed together as a whole on the first sheet A1.

In the embodiment, without reducing the feeding speed a in Embodiment One, it is possible to manufacture the multi-layer cushion structure of the buffer sheet C2 during the feeding process, so that the buffer sheet C2 has a better buffering effect than the buffer sheet C2 in Embodiment One.

### Embodiment Three

As shown in FIG. 11, in the embodiment, the buffer sheet manufacturing module 100, based on embodiment one or embodiment two, further includes a second unwinding unit 60, a second adhesive application unit 70, and a rolling and pressing unit 80. The second unwinding unit 60 is used to unwind the second sheet A2, the first sheet A1 and the second sheet A2 are fed synchronously and continuously, and the buffer layer B3 (the buffer layer B3) is either the buffer layer B1 in Embodiment One or the buffer layer B3 in Embodiment Two, wherein the buffer layer B3 is located between the first sheet A1 and the second sheet A2, which means that the second sheet A2 and the first sheet A1 have the same feeding speed a, and the first sheet A1 and the second sheet A2 are fed synchronously and towards each other;

The location for adhesive application for the second adhesive application unit 70 is as follows: x) the adhesive is applied on the surface of the second sheet A2 facing the first sheet A1 and at the interval S relative to the first sheet A1, or y) the surface of the first sheet A1 facing the second sheet A2 and at the interval S on the first sheet A1.

The rolling and pressing unit 80 is used to roll and press the first sheet A1 and the second sheet A2 together only at the interval S therebetween to thereby fix the first sheet A1 and the second sheet A2 in a direction perpendicular to the feeding direction, the buffer layer B3 after cutting being located between two adjacent intervals S and being covered by the first sheet A1 and the second sheet A2.

The second adhesive application unit 70 may further be used to continuously apply the adhesive to the surface of the second sheet A2 facing the first sheet A1 at a location along at least one side of the feeding direction for connecting the first sheet A1 and the second sheet A2 in the feeding direction. The location for adhesive application, i.e., "at least one side", is the same as at least one of the ranges A-E in Embodiment One, and then, the rolling and pressing unit 80 is used to roll and press edges of the locations for adhesive application that are opposite to and used to fix the first sheet A1 and the second sheet A2 together.

In the embodiment, in other words, the second adhesive application unit 80 may apply the adhesive to different locations to fix the first sheet A1 and the second sheet A2, depending on the different fixing methods and locations. One method is to fix the first sheet A1 and the second sheet A2 to each other at the interval S, with the buffer layer B3 located between two adjacent intervals S. The other method is to fix the first sheet A1 and the second sheet A2 near at least one edge along the feeding direction, with the buffer layer 3B also located between two adjacent intervals S. In the embodiment, the method for fixing the first sheet A1 and the second sheet A2 may be determined based on the material of the selected buffer layer B3 and the number of cushions (B11, B12) in the buffer layer B3.

In the embodiment, the buffer sheet C3 is a structure consisting of three or more layers sandwiched between the first sheet A1, the buffer layer B, and the second sheet A2. The buffer layer B may be configured to one or more layers depending on the number of cushions. In the embodiment, compared to Embodiment One and Embodiment Two, the second sheet A2 is added, wherein the method of using the first sheet A1 and the second sheet A2 to clamp and hold the buffer layer B to manufacture the buffer sheet C3 may improve the wear resistance of the buffer sheet C2, and meanwhile, make the buffer sheet C3 look more beautiful and flatter, which is conducive to the production of the packaging bag using the buffer sheet C3.

As shown in FIG. 12, in the invention, the rolling and pressing unit 80 includes at least one set of pressure rollers 81, and the pressure roller 81 is provided with a pressure boss 82, the pressure boss 82 being perpendicular to the feeding direction and extends outward from one end or an outer periphery of the pressure roller 81; when the pressure roller 81 rotates, the pressure boss 82 presses and fixes the first sheet A1, the buffer layer B3 or the buffer unit B0 and the second sheet A2 only at the interval S, so that the buffer layer B3 or the buffer unit B0 between two adjacent intervals S are still in the three-dimensional grid structure and are not affected by the pressing.

### Embodiment Four

In the embodiment, the buffer sheet manufacturing module 100 is an improvement on Embodiment One to produce a buffer sheet C4.

As shown in FIGS. 13 and 14, in the embodiment, a buffer layer B4 includes an unstretched slit paper B13 and a third sheet A3.

The buffer sheet manufacturing module 100 further includes a third unwinding unit 90 and a slit paper unwinding unit 10a.

Specifically, the third unwinding unit 90 is used to unwind the third sheet A3 and continuously feed the third sheet A3 in the feeding direction, the third sheet A3 is provided with a plurality of pleats A31 in the feeding direction, and the pleats A31 are unwound together with the third sheet A3 and are in an unstretched state; the slit paper unwinding unit 10a is used to unwind the slit paper B13, so that the slit paper B13 is continuously fed in the feeding direction, and the slit paper B13 is located between the first sheet A1 and the third sheet A3;

Wherein the slit paper B13and the third sheet A3 are unwound synchronously, and the slit paper B13 and the third sheet A3 are connected to each other on both sides y1 in the feeding direction.

The buffer layer B4 in the embodiment is different from the buffer layer in Embodiment One. Specifically, in the embodiment, the buffer layer B4 is formed by connecting the slit paper B13 and the third sheet A3; the adhesive applied by the first adhesive application unit 50 is only located on the surfaces of the first sheet A1 or the buffer layer B13 that are opposite to each other, and is disposed on one side y2 in the feeding direction, thereby connecting the buffer layer B4 on one side y2 of the first sheet A1. In other words, in the embodiment, the first adhesive application unit 50 applies the adhesive according to the range D in Embodiment One, corresponding to the manner shown in FIG. 8d.

As shown in FIG. 15, after the first sheet A1 and the buffer layer B4 are connected to each other, the buffer sheet C4 is formed; the buffer sheets are fixed to each other on one side y2 in the feeding direction, while those on the other side y3 in the feeding direction are in an unfixed and separated state.

Widths of the slit paper B3 and the third sheet A3 perpendicular to the feeding direction is smaller than a width of the first sheet A1. When the third sheet A3 moves toward the other side y3 of the first sheet A1, the pleats A31 on the third sheet A3 are unfolded, which at the same time drives the slit paper B13 connected to the third sheet A3 to move, thereby stretching the slit paper B13; the stretched slit paper B13 forms a three-dimensional grid structure, thus having a buffering performance.

Wherein before the slit paper B13 is stretched, the buffer sheet C4 is of a planar structure, and after the slit paper B13 in the buffer sheet C4 is stretched, the thickness increases. Therefore, in the embodiment, the buffer sheet C4 is of a planar structure during transportation and storage, which may reduce transportation costs. When in use, the slit paper B13 may be stretched by pushing the third sheet A3, thus becoming a three-dimensional structure to buffer and wrap the items.

Alternatively, the buffer sheet C4 in the embodiment may be used to manufacture the packaging bag.

### Embodiment Five

In the embodiment, the buffer sheet manufacturing module 100 is an improvement on Embodiment Four to produce a buffer sheet C5.

The manufactured buffer sheet C5 is shown in FIG. 16. With reference to FIG. 17, the buffer sheet C5 manufactured in the embodiment differs from the buffer sheet C4 in Embodiment Four only in the buffer layer B5, and the difference for the buffer layer B5 is that the third sheet A3 is not provided with a pleat A31 and the third sheet A3 is connected to the slit paper B13 only on one side y11 in the feeding direction, while the other side of the third sheet A3 in the feeding direction is not connected to the slit paper B13; meanwhile, the buffer sheet C5 further includes a fourth surface A4, the fourth surface A4 is only connected to the other side y12 of the slit paper B13 in the feeding direction, while the other side of the fourth surface A4 in the feeding direction being not connected to the slit paper B13; one side of the third sheet A3 that is not connected to the slit paper B13 and one side of the fourth surface A4 that is not connected to the slit paper B13 are stacked on each other and are not connected to each other to form an overlapping area Z.

When the third sheet A3 moves toward the other side y3 of the first sheet A1, the overlapping area Z is unfolded, which at the same time drives the slit paper B13 connected to the third sheet A3 to move, thereby stretching the slit paper B13; the stretched slit paper B13 forms a three-dimensional grid structure, thus having a buffering performance.

Before the slit paper B13 is stretched, the buffer sheet C5 is of a planar structure, and after the slit paper B13 in the buffer sheet C5 is stretched, the thickness increases. Therefore, in the embodiment, the buffer sheet C54 is of a planar structure during transportation and storage, which may reduce transportation costs. When in use, the slit paper B13 may be stretched by pushing the third sheet A3, thus becoming a three-dimensional structure to buffer and wrap the items.

Alternatively, the buffer sheet C5 in the embodiment may be used to manufacture the packaging bag.

Therefore, the buffer sheet manufacturing module 100 in the embodiment further includes a fourth unwinding unit 11a; the fourth unwinding unit 11a is used to unwind a fourth surface A4, the fourth surface A4 partially overlaps the third sheet A3 to form the overlapping area Z, and the overlapping area Z is unwound synchronously with the third sheet A3 and the fourth surface A4. After the unwound third sheet A3 and the fourth surface A4 are overlapped, widths perpendicular to the feeding direction is smaller than a width of the first sheet A1. The slit paper B13 is also in an unstretched state and is fixed on the side y12 of the third sheet A3 and the side y11 of the fourth surface A4; meanwhile, the first adhesive application unit 50 still applies the adhesive to the first sheet A1 or the slit paper A13 in the manner of the range D of Embodiment One.

### Embodiment Six

As shown in FIGS. 19 and 20, the embodiment is an improvement upon Embodiment Four or Five, with differences from Embodiment Four or Five in that the buffer sheet manufacturing module 100 is used to manufacture a buffer sheet C6, and the buffer sheet manufacturing module 100 further includes a slit paper cutting unit 12a.

The slit paper cutting unit 12a is disposed at a front end of the paper pressing unit 30 in the feeding direction. The slit paper cutting unit 10a rolls and cuts the slit paper B13 at intervals while feeding at a location perpendicular to the feeding direction.

In the embodiment, the adhesive is disposed on both ends of the slit paper B13 relative to the third sheet A3, or on the third sheet A3 relative to the slit paper B13, at a location in the feeding direction. The adhesive is disposed on the slit paper relative to the first sheet, or on the first sheet relative to the slit paper at a location in the feeding direction;

The slit paper B13 after cutting forms a first end x1 and a second end x2 according to an order of cutting, and the slit paper B13 after cutting is fed sequentially from the first end x1 to the second end x2 to the paper pressing unit 30, where the paper pressing unit 30 fixes the slit paper B13 on the third sheet A3 along both sides of the feeding direction during the feeding process; intervals S are formed at locations not covered by the slit paper B13 and perpendicular to the feeding direction on the first sheet A1, and there are a plurality of intervals S, which are arranged at intervals in the feeding direction of the first sheet A1, at least two slit papers B13 after cutting being placed between two adjacent intervals S; in other words, after the slit paper B13 is cut by the slit paper cutting unit 12a, both sides of the slit paper B13 are sequentially fixed onto the third sheet A3, and then, the slit paper cutting unit 12a continues to cut the slit paper B13 and accelerates the feeding of the slit paper B13 that is cut again, so that the slit paper B13 that is cut again overlaps with the slit paper B13 that is previously cut in at least a portion of the area to form an overlapping area D; then, as the feeding continues, the slit paper B13 that is cut again is fixed to the third sheet A3 in the same way as the slit paper B13 that is previously cut; finally, the slit paper cutting unit 10a cuts the slit paper B13 again, and a cutting location of the slit paper B13 that is cut again is opposite to the interval S as the slit paper B13 and the first sheet A1 continue to be fed; when the slit paper B13 that is cut again moves to the interval S, the slit paper unwinding unit 10a reduces the feeding speed, and as the first sheet A1 is fed, the feeding speed returns to the same as that of the first sheet A1 after the interval S is reserved on the first sheet A1.

Specifically, the first unwinding unit is provided with a first feeding speed a, and the slit paper unwinding unit is provided with a varying feeding speed b, wherein the varying feeding speed b includes a second feeding speed b1, a third feeding speed b2 and a fourth feeding speed b3, the third feeding speed b2 being the same as the first feeding speed a, the second feeding speed b1 being less than the first feeding speed a, the fourth feeding speed b3 being greater than the first feeding speed a; when the first end x1 of the slit paper B13 after cutting is located at an end location of the interval S, the slit paper unwinding unit 10a feeds the slit paper B13 at the third feeding speed b2, so that the slit paper B13 and the first sheet A1 are fed synchronously; when the second end x2 of the slit paper B13 after cutting is fed to a location between two adjacent intervals S, the slit paper unwinding unit 10a feeds the slit paper B13 at the fourth speed b3, and the first end x1 of the slit paper B13 fed at the fourth feeding speed b3 overlaps with the second end x2 of the previous slit paper B13 after cutting; after the slit papers B13 overlap, the slit paper unwinding unit 10a continues to feed the slit paper B13 at the third feeding speed b2 until the second end x2 of the next slit paper B13 after cutting is located at a starting location of another adjacent interval S, and then the slit paper unwinding unit 10a feeds the slit paper B13 at the second feeding speed b1, so that the second end x2 of the next slit paper B13 is located at an end location of the interval S relative to the first sheet A1, and the slit paper unwinding unit 10a feeds again the slit paper B13 at the third feeding speed b2, thereby forming two partially overlapping slit papers B13 in the two adjacent intervals S of the first sheet A1.

In the embodiment, the paper pressing unit 30 is used to roll and hold the first sheet A1 and the slit paper B13 at a location where the adhesive is applied, and to roll and hold the third sheet A3 and the slit paper B13 at a location where the adhesive is applied to fix both ends of the third sheet A3 and the slit paper B13.

In the embodiment, when the fourth surface A4 of Embodiment Five is also present, one of both sides of the slit paper B13 in the feeding direction is fixed to a side of the third sheet A3, and the other of both sides of the slit paper B13 in the feeding direction is fixed to one side of the fourth surface A4, thereby completely covering the third sheet A3 and the fourth surface A4 with the slit paper B13 to forming the buffer sheet C6.

In the embodiment, since the slit paper B13 is fixed to the third sheet A3 and/or the fourth surface A4 in an unstretched state, when the slit paper B13 is stretched perpendicular to the feeding direction to form a three-dimensional grid structure, a length perpendicular to the feeding direction will be increased, but the width of the slit paper B13 in the feeding direction will be decreased. When two slit papers B13 are stacked together to manufacture the buffer unit B0, even if the slit paper B13 is stretched into a three-dimensional grid structure, the loss in a width direction may be minimized, ensuring that the buffer unit B0 may cover the area maximally and improve the buffering performance.

### Embodiment Seven

As shown in FIGS. 21 and 24 to 27, the invention, at the same time, further discloses a packaging bag manufacturing device 200, which includes two buffer sheet manufacturing modules 100, wherein the buffer sheet manufacturing module 100 is used to manufacture at least one buffer sheet (C1, C2, C3) in Embodiments One to Three, and buffer sheets (C1, C2, C3) manufactured by the two buffer sheet manufacturing modules 100 are a first buffer sheet C11 and a second buffer sheet C12, respectively; the first buffer sheet C11 and the second buffer sheet C12 are the same, and the first buffer sheet C11 and the second buffer sheet C12 are opposite to each other and are fed synchronously.

"Opposite with each other" means that the first sheet A1 of the first buffer sheet C11 and the first sheet A1 of the second buffer sheet C12 are located on the outside, while the buffer unit B0 of the first buffer sheet C11 and the buffer unit B0 of the second buffer sheet are both located between the first sheet A1 of the first buffer sheet C11 and the first sheet A1 of the second buffer sheet C12, thereby ensuring that a bag body of the manufactured packaging bag 300 is the first sheet A1 and the buffer unit B0 is located inside the packaging bag 300.

The packaging bag manufacturing device 200 further includes:
a first bag-forming adhesive application unit 21 for applying the adhesive to a surface of the first buffer sheet C11 and/or the second buffer sheet C12 facing the other second buffer sheet C12 or the other first buffer sheet C11, the first bag-forming adhesive application unit 21 applying the adhesive at locations that are arranged at intervals and in a direction perpendicular to the feeding direction, the first bag-forming adhesive application unit 221 applying the adhesive at a location corresponding to the interval S of the first buffer sheet C11 or the second buffer sheet C12, the buffer layer (B1, B2, B3) of the first buffer sheet C11 being opposite to the buffer layer (B1, B2, B3) of the second buffer sheet C12;
a first bag-forming pressing unit 22 for rolling and pressing the first buffer sheet C11 and the second buffer sheet C12 and pressing the first buffer sheet C11 and the second buffer sheet C12 together at a location corresponding to the interval S to thereby form two sides of a packaging bag.

The packaging bag manufacturing device 200 further includes:
a second bag-forming adhesive application unit 23, the second bag-forming adhesive application unit 23 being used for further applying the adhesive to the surface of the first buffer sheet C11 and/or the second buffer sheet C12 facing the other second buffer sheet C12 or the other first buffer sheet C11, the second bag-forming adhesive application unit 23 applying the adhesive at a location continuously in the feeding direction and located only at one side in the feeding direction relative to the first buffer sheet C11;
a second bag-forming pressing unit 24 for rolling and pressing the first buffer sheet C11 and the second buffer sheet C12 and pressing the first buffer sheet C11 and the second buffer sheet C12 together at a location where the second bag-forming adhesive application unit 23 applies the adhesive to thereby form a bottom of the packaging bag.

In the embodiment, the first bag-forming pressing unit 22 only presses the first buffer sheet C11 and the second buffer sheet C12 relative to the location of the interval S to form sides of the packaging bag 300, and the buffer layer (B1, B2, B3) is not disposed inside the sides of the packaging bag 300; therefore, during pressing, no preheating or time for long pressing is required, which may maximize the feeding speed a and thus improve manufacturing efficiency. In addition, the packaging bag manufacturing device 200 is also compatible with various types of buffer layers (B1, B2, B3), thus producing a variety of packaging bags 300 with different structures.

In the embodiment, the second bag-forming pressing unit 24 may directly press and fix the first buffer sheet C11 and the second buffer sheet C12 on one side in the feeding direction to form the bottom of the bag. The manufactured packaging bag 300 is formed with a side at the interval S, a bottom formed on one side in the feeding direction, and the first bag-forming adhesive application unit 21, the first bag-forming pressing unit 22, the second bag-forming adhesive application unit 23 and the second bag-forming pressing unit 24 all operate during the feeding of the first buffer sheet C11 and the second buffer sheet C12, while the first buffer sheet C11 and the second buffer sheet C12 being also continuously fed during manufacturing; therefore, while feeding the first sheet A1, the second sheet A2, and the buffer layers B1, B2, and B3, as well as the slit paper B, the first buffer sheet C11 and the second buffer sheet C12 are manufactured continuously and without interruption, and meanwhile the packaging bag is manufactured simultaneously using the first buffer sheet C11 and the second buffer sheet C12, which can maximize the production efficiency.

In the embodiment, the bottom of the packaging bag 300 may further be manufactured by another method. Specifically, the packaging bag manufacturing device further includes:
a bottom-folding unit 25, disposed at a rear end of the second bag-forming adhesive application unit 23 for folding the location where the second bag-forming adhesive application unit 23 applies the adhesive on the first buffer sheet C11 or the second buffer sheet C12 to cover an edge of the other second buffer sheet C12 or the other first buffer sheet C11;
the second bag-forming pressing unit 24 is used to press the first buffer sheet C11 or the second buffer sheet C12 at folded locations to form the bottom of the packaging bag.

In other words, the bottom of the packaging bag 300 is not formed by directly pressing the first buffer sheet C11 and the second buffer sheet C12 together on one side in the feeding direction, but rather by applying the adhesive to the side of the first buffer sheet C11 or the second buffer sheet C12, then folding and wrapping the other second buffer sheet C12 or the first buffer sheet C11 with the first buffer sheet C11 or a portion of the second buffer sheet C12 as well as then pressing. Compared to the method of directly pressing the sides of the first buffer sheet C11 and the second buffer sheet C12 together without folding to form the bottom, the method allows the packaging bag to have a deeper insertion depth and increases an internal space of the packaging bag 300.

In the embodiment, the packaging bag manufacturing device 200 further includes a bag-forming cutting unit 26; the bag-forming cutting unit 26 is used to cut the packaging bag 300 formed after pressing in a direction perpendicular to the feeding direction at a location on the side of two adjacent packaging bags 300, i.e., at each of the intervals S. In the embodiment, the bag-forming cutting unit 26 also uses a rolling cutting method, contacting the packaging bag 300 only at the interval S, thereby avoiding impact on the buffer layers (B1, B2, B3) between the two intervals S and reducing the buffering effect; in addition, the rolling cutting method may also be combined with the feeding speed of the first buffer sheet C11 or the second buffer sheet C12 to achieve high-speed cutting and improve production efficiency.

In the embodiment, the first bag-forming pressing unit 22 and the second bag-forming pressing unit 24 are similar in structure to the rolling and pressing unit 80 in Embodiment Two corresponding to FIG. 12; the bag-forming cutting unit 26 is similar in structure to the cutting unit 40 in Embodiment One corresponding to FIG. 7, and both adopt rolling pressing and rolling cutting methods.

When the first buffer sheet C11 and the second buffer sheet C12 are fed, the feeding speed is the same as that of the first sheet A1 in the manufacturing module 100, which is the feeding speed a. In other words, in the manufacturing device 200, the manufacturing and feeding of the buffer layers (B1, B2, B3) are performed at the varying speed b; the first sheet A1 and the second sheet A2 are fed at the speed a, and meanwhile the entire buffer sheet manufacturing module 100 and the packaging bag manufacturing device 200 with two buffer sheet manufacturing modules 100 are completed on the same machine. The entire machine may complete manufacturing the packaging bag 300 at the feeding rate a. In this way, on the one hand, multiple production processes may be integrated into one machine, reducing the time and material costs of transferring raw materials and the first buffer sheet C11 and the second buffer sheet C12, and on the other hand, the production efficiency may be improved while reducing a space size of the entire manufacturing device 200.

### Embodiment Eight

With reference to FIGS. 22 to 26, the packaging bag manufacturing device of the invention is an improvement on Embodiment Seven, and the packaging bag manufacturing device 200 of the embodiment includes two buffer sheet manufacturing modules 100, wherein the buffer sheet manufacturing module 100 is used to manufacture at least one buffer sheet (C4, C5, C6) in Embodiments Four to Six, and the buffer sheets (C4, C5, C6) manufactured by the two buffer sheet manufacturing modules 100 are a first buffer sheet C21 and a second buffer sheet C22, respectively; the first buffer sheet C21 and the second buffer sheet C22 are the same, and the first buffer sheet C21 and the second buffer sheet C22 are opposite to each other and are fed synchronously.

"Opposite with each other" means that the first sheet A1 of the first buffer sheet C21 and the first sheet A1 of the second buffer sheet C22 are located on the outside, while the buffer unit B0 of the first buffer sheet C21 and the buffer unit B0 of the second buffer sheet are both located between the first sheet A1 of the first buffer sheet C21 and the first sheet A1 of the second buffer sheet C22, thereby ensuring that a bag body of the manufactured packaging bag 300 is the first sheet A1 and the buffer unit B0 is located inside the packaging bag 300.

Based on Embodiment Seven, the packaging bag manufacturing device 200 further includes:
a slit paper adhesive application unit 27, the slit paper adhesive application unit 27 being used to apply the adhesive to a side edge of the slit paper B31 in the first buffer sheet C21 and/or the second buffer sheet C22 that is not connected to the first sheet A1, so as to fix the two buffer layers B0 in the first buffer sheet C21 and the second buffer sheet C22 when the packaging bag 300 is manufactured; two buffer layers B0 are stacked on top of each other and are opposite to each other, and are fixed at a location located on side edges in the two buffer layers B0 that are not connected to the first sheet A1.

In the embodiment, the two buffer layers B0 of the first buffer sheet C21 and the second buffer sheet C22 are fixed according to the embodiment, and the first buffer sheet C21 and the second buffer sheet C22 are fixed at two intervals S to form the side of the packaging bag 300 according to Embodiment Seven; the first sheet A1 of the two buffer sheets (C21, C22) is fixed to each other at one side in the feeding direction. The above process forms the bottom of a new type of a prefabricated packaging bag 300.

In the embodiment, the manufacturing device 200 further includes a bottom fixing adhesive application unit 28; the bottom fixing adhesive application unit is used to apply the adhesive to the surface of the slit paper B13 facing the first sheet A1 at one side edge that is not fixed to the first sheet A1 in the feeding direction of the slit paper B13; the bottom fixing adhesive application unit 28 is used to fix the slit paper B13 to a bottom location of the packaging bag formed by the first sheet A1 after the slit paper B13 is stretched, so as to prevent the slit paper B13 from springing back.

In the invention, the buffer sheet manufacturing module does not require the buffer layer or the slit paper at pressing and fixing locations, i.e., at the intervals S, thus eliminating the need for long time for pressing and heating; the manufacturing is performed by rolling and pressing in a manner of continuous feeding, which avoids the situations of stopping feeding by stepped pressing, thus improving production efficiency, achieving a feeding speed of 100-150m per minute and significantly increasing production efficiency compared to existing manufacturing method by stepped feeding.

At last, it should be noted that the above embodiments are only used to describe the technical solution of the present invention, but not intended to limit the protection scope of the present invention. Although the present invention is described in detail with reference to preferred embodiments, a person skilled in the art should understand that the technical solution of the present invention can be modified or equivalently substituted without departing from the essence and scope of the technical solution of the present invention.

## Claims

1. A buffer sheet manufacturing module, comprising:
a first unwinding unit for unwinding a first sheet and making the first sheet be continuously fed in an unwinding direction;
a buffer layer feeding unit for continuously feeding a buffer layer in the feeding direction, the buffer layer being located above the first sheet, the buffer layer and/or the first sheet being applied with an adhesive for bonding the first sheet and the buffer layer;
a paper pressing unit for rolling, pressing and holding the first sheet and the buffer layer at a location where the adhesive is applied on the first sheet and/or the buffer layer to bond to fix the first sheet and the buffer layer;
a cutting unit, disposed at a front end of the paper pressing unit in the feeding direction, the cutting unit rolling and cutting the buffer layer at intervals while feeding, a cutting location being perpendicular to the feeding direction;
wherein the buffer layer after cutting is separated into buffer units, and each of the buffer units forms a first end and a second end , each of the buffer units is sequentially fed to the paper pressing unit from the first end to the second end, and the plurality of buffer units are fixed to the first sheet by the paper pressing unit after being pressed and held;
the first unwinding unit is provided with a first feeding speed a, and the buffer layer feeding unit is provided with a varying feeding speed b; the varying feeding speed b comprises a second feeding speed b1 and a third feeding speed b2, the third feeding speed b2 is the same as the first feeding speed, and the second feeding speed b1 is less than the first feeding speed b;
an intervals S is formed between the first end of the buffer unit after cutting and the second end of the previous buffer unit after cutting; after the cutting unit cuts the buffer layer, the buffer layer feeding unit continuously feeds at the second feeding speed b1 that is less than the first feeding speed a until the interval S is reserved on the first sheet; after the first end of the buffer unit is fixed to the first sheet, the buffer layer feeding unit then feeds continuously and synchronously with the first sheet at the third feeding speed b2.

2. The buffer sheet manufacturing module according to claim 1, comprising a first adhesive application unit, wherein the first adhesive application unit is used to continuously apply the adhesive for bonding the first sheet and the buffer layer to a surface of the buffer layer and/or the first sheet facing the other first sheet or the buffer layer, and the first adhesive application unit applies the adhesive at a location on the first sheet or the buffer layer and at least on one side in the feeding direction.

3. The buffer sheet manufacturing module according to claim 2, further comprising:
a second unwinding unit for unwinding a second sheet, the first sheet and the second sheet being fed synchronously and continuously, the buffer layer being located between the first sheet and the second sheet;
x) the adhesive is disposed on a surface of the second sheet facing the first sheet at a location with an interval S relative to the first sheet, or y) the adhesive is disposed on a surface of the first sheet facing the second sheet at a location with the interval S relative to the first sheet;
a rolling and pressing unit for rolling and pressing the first sheet and the second sheet together at the interval S therebetween to thereby fix the first sheet and the second sheet in a direction perpendicular to the feeding direction, the buffer layer after cutting being located between two adjacent intervals S and being covered by the first sheet and the second sheet.

4. The buffer sheet manufacturing module according to claim 3, further comprising:
a second adhesive application unit for continuously applying the adhesive to the surface of the second sheet facing the first sheet, at a location along at least one edge in the feeding direction for connecting the first sheet with the second sheet in the feeding direction.

5. The buffer sheet manufacturing module according to claim 4, wherein the buffer layer comprising: at least one layer of cushion, and the cushion comprises at least one of a corrugated paper structure, an embossed structure, a plastic bubble wrap and a three-dimensional hexagonal grid structure after the slit paper is stretched.

6. The buffer sheet manufacturing module according to claim 5, wherein the buffer layer comprises a plurality of layers of cushions, the manufacturing module comprises a plurality of cutting units and a plurality of first adhesive application units, and the buffer layer feeding unit comprises a plurality of cushion feeding units; the number of the plurality of cushion feeding units, the plurality of first adhesive application units, the plurality of cutting units, and the plurality of layers of cushions are the same, and each of the cushion feeding units is used to feed one layer of the cushion, at least one of the first adhesive application units is used to continuously apply adhesive to a surface of one layer of the cushion facing an adjacent layer of the cushion, at a location along at least one side of the feeding direction; each of the cutting units is used to cut one layer of the cushion, and the plurality of layers of cushions are stacked one on top of the other and fed continuously and synchronously;
one layer of the cushion is connected to the adjacent other layer of the cushion at a continuous adhesive application location after being cut.

7. The buffer sheet manufacturing module according to claim 2, wherein the buffer layer unwinding unit further comprises:
a third unwinding unit for unwinding a third sheet and continuously feeding the third sheet in an unwinding direction, the third sheet being provided with a plurality of pleats in the unwinding direction;
a slit paper unwinding unit for unwinding a slit paper and continuously feeding the slit paper in the unwinding direction, the slit paper being located between the first sheet and the third sheet;
wherein the slit paper and the third sheet are unwound synchronously, and the slit paper and the third sheet are connected to each other on both sides in the feeding direction; widths of the slit paper and the third sheet perpendicular to the feeding direction are smaller than a width of the first sheet perpendicular to the feeding direction; the slit paper and the third sheet are connected to each other to form the buffer layer; the adhesive applied by the first adhesive application unit is only located on one side edge of the first sheet or the slit paper in the feeding direction, thereby connecting the buffer layer on one side of the first sheet.

8. A packaging bag manufacturing device, comprising two buffer sheet manufacturing modules, the buffer sheet manufacturing modules being used to manufacture a buffer sheet respectively, the buffer sheets manufactured by the two buffer sheet manufacturing modules being a first buffer sheet and a second buffer sheet respectively, the first buffer sheet and the second buffer sheet having the same structure, the first buffer sheet and the second buffer sheet being opposite to each other and being fed synchronously;
wherein the buffer sheet manufacturing module comprises:
a first unwinding unit for unwinding a first sheet and making the first sheet be continuously fed in an unwinding direction;
a buffer layer feeding unit for continuously feeding a buffer layer in the feeding direction, the buffer layer being located above the first sheet, the buffer layer and/or the first sheet being applied with an adhesive for bonding the first sheet and the buffer layer;
a paper pressing unit for rolling, pressing and holding the first sheet and the buffer layer at a location where the adhesive is applied on the first sheet and/or the buffer layer to bond to fix the first sheet and the buffer layer;
a cutting unit, disposed at a front end of the paper pressing unit in the feeding direction, the cutting unit rolling and cutting the buffer layer at intervals while feeding, a cutting location being perpendicular to the feeding direction;
wherein the buffer layer after cutting forms a first end and a second end according to an order in which the buffer units are cut, and the buffer layer after cutting is sequentially fed to the paper pressing unit from the first end to the second end and is fixed to the first sheet after being pressed and held by the paper pressing unit;
the first unwinding unit is provided with a first feeding speed a, and the buffer layer feeding unit is provided with a varying feeding speed b; the varying feeding speed b includes a second feeding speed b1 and a third feeding speed b2, the third feeding speed b2 is the same as the first feeding speed, and the second feeding speed b1 is less than the first feeding speed a;
an intervals S is formed between the first end of the buffer layer after cutting and the second end of the previous buffer layer after cutting; after the cutting unit cuts the buffer layer, the buffer layer feeding unit continuously feeds at the second feeding speed b1 that is less than the first feeding speed a until the interval S is reserved on the buffer layer relative to the first sheet; after the first end is fixed to the first sheet, the buffer layer feeding unit then feeds continuously and synchronously with the first sheet at the third feeding speed b2;
the packaging bag manufacturing device further comprises:
a first bag-forming adhesive application unit for applying the adhesive to a surface of the first buffer sheet and/or the second buffer sheet facing the other second buffer sheet or the first buffer sheet, the first bag-forming adhesive application unit applying the adhesive at intervals at a location in a direction perpendicular to the feeding direction, the first bag-forming adhesive application unit applying the adhesive at a location corresponding to the interval S of the first buffer sheet or the second buffer sheet, the buffer layer of the first buffer sheet being relative to the buffer layer of the second buffer sheet;
a first bag-forming pressing unit for rolling and pressing the first buffer sheet and the second buffer sheet and pressing the first buffer sheet and the second buffer sheet together at a location corresponding to the interval S to thereby form two sides of a packaging bag.

9. The packaging bag manufacturing device according to claim 8, further comprises:
a second bag-forming adhesive application unit for further applying the adhesive to the surface of the first buffer sheet and/or the second buffer sheet, at a location continuously in the feeding direction and located only at one lateral edge in the feeding direction;
a second bag-forming pressing unit for rolling and pressing the first buffer sheet and the second buffer sheet and pressing the first buffer sheet and the second buffer sheet together at a location where the second bag-forming adhesive application unit applies the adhesive to thereby form a bottom of the packaging bag.

10. The packaging bag manufacturing device according to claim 9, further comprises:
a bottom-folding unit, disposed at a rear end of the second bag-forming adhesive application unit, for folding the location where the second bag-forming adhesive application unit applies the adhesive on the first buffer sheet or the second buffer sheet, to cover an edge of the other second buffer sheet or the other first buffer sheet;
wherein the second bag-forming pressing unit is used to press folded locations of the first buffer sheet or the second buffer sheet to form the bottom of the packaging bag.

11. The packaging bag manufacturing device according to claim 8, comprising a first adhesive application unit, wherein the first adhesive application unit is used to continuously apply the adhesive for bonding the first sheet and the buffer layer to the buffer layer and/or the first sheet, and the first adhesive application unit applies the adhesive at a location on the first sheet or the buffer layer and at least on one side edge in the feeding direction.

12. The packaging bag manufacturing device according to claim 11, wherein the manufacturing module further comprises:
a second unwinding unit for unwinding a second sheet, the first sheet and the second sheet being fed synchronously and continuously, the buffer layer being located between the first sheet and the second sheet;
x) the adhesive is disposed on a surface of the second sheet facing the first sheet at a location with an interval S relative to the first sheet, or y) the adhesive is disposed on a surface of the first sheet facing the second sheet at a location with the interval S relative to the first sheet;
a rolling and pressing unit for rolling and pressing the first sheet and the second sheet together at the interval S therebetween to thereby fix the first sheet and the second sheet in a direction perpendicular to the feeding direction, the buffer layer after cutting being located between two adjacent intervals S and being covered by the first sheet and the second sheet.

13. The packaging bag manufacturing device according to claim 12, wherein the manufacturing module further comprises:
a second adhesive application unit for continuously applying the adhesive to the surface of the second sheet facing the first sheet, at a location along at least one edge in the feeding direction for connecting the first sheet with the second sheet in the feeding direction.

14. The packaging bag manufacturing device according to claim 12, wherein the buffer layer comprises at least one layer of cushion, and the cushion comprises at least one of a corrugated paper structure, an embossed structure, a plastic bubble wrap and a three-dimensional hexagonal grid structure after the slit paper is stretched.

15. The packaging bag manufacturing device according to claim 14, wherein the buffer layer has a plurality of layers of cushions, the manufacturing module comprises a plurality of cutting units and a plurality of second adhesive application units, and the buffer layer feeding unit comprises a plurality of cushion feeding units; the number of the plurality of cushion feeding units, the plurality of second adhesive application units, the plurality of cutting units, and the plurality of layers of cushions are the same, and each of the cushion feeding units is used to feed one layer of the cushion; at least one of the first adhesive application units is used to continuously apply adhesive to a surface of one layer of the cushion facing an adjacent layer of the cushion, at a location along at least one side of the feeding direction; each of the cutting units is used to cut one layer of the cushion, and the plurality of layers of cushions are stacked one on top of the other and fed continuously and synchronously;
one layer of the cushion is connected to the adjacent other layer of the cushion at a location where the first adhesive application unit applies the adhesive continuously after being cut.

16. The packaging bag manufacturing device according to claim 15, wherein the buffer layer unwinding unit further comprises:
a third unwinding unit for unwinding a third sheet and continuously feeding the third sheet in an unwinding direction, the third sheet being provided with a pleat extending in the feeding direction;
a slit paper unwinding unit for unwinding a slit paper and continuously feeding the slit paper in the unwinding direction, the slit paper being located between the first sheet and the third sheet;
wherein the slit paper and the third sheet are unwound synchronously, and the slit paper and the third sheet are connected to each other on both side edges perpendicular to the feeding direction; widths of the slit paper and the third sheet perpendicular to the feeding direction are smaller than a width of the first sheet perpendicular to the feeding direction; the slit paper and the third sheet are connected to each other to form the buffer layer; the adhesive applied by the first adhesive application unit is only located on one side edge of the first sheet or the slit paper in the feeding direction, thereby connecting the buffer layer on one side of the first sheet.

17. A buffer sheet manufacturing module, comprising:
a first unwinding unit for unwinding a first sheet and making the first sheet be continuously fed in an unwinding direction;
a third unwinding unit for unwinding a third sheet and continuously feeding the third sheet in an unwinding direction, the third sheet being provided with a plurality of pleats extending in the feeding direction;
a slit paper unwinding unit for unwinding a slit paper and continuously feeding the slit paper in the unwinding direction, the slit paper being located between the first sheet and the third sheet, wherein an adhesive is applied to a location of the slit paper relative to the third sheet, or the adhesive is applied to a location of the third sheet relative to the slit paper; the adhesive is positioned along both side edges of the feeding direction; the slit paper is provided with the adhesive relative to the first sheet, or the first sheet is provided with the adhesive relative to the slit paper at one side end in the feeding direction;
a paper pressing unit for rolling, pressing and holding a location of the first sheet and the slit paper where the adhesive is applied, so that the slit paper is connected to the third sheet at one side edge and the third sheet is connected to the slit paper at both side edges;
a cutting unit, disposed at a front end of the paper pressing unit in the feeding direction, the cutting unit rolling and cutting the slit paper at intervals while feeding, a cutting location being perpendicular to the feeding direction;
wherein for the slit paper after cutting, each of the buffer units forms a first end and a second end according to an order in which the buffer units are cut, each of the buffer units is sequentially fed to the paper pressing unit from the first end to the second end, and the paper pressing unit fixes both side edges of the slit paper to the first sheet; the interval S is formed on an area of the first sheet that is not covered with the slit paper and perpendicular to the feeding direction, a plurality of intervals S are arranged, and the plurality of intervals S are arranged at intervals with the feeding direction of the first sheet; after the first sheet is fixed with the slit paper, at least two slit papers after cutting are disposed between two adjacent intervals S;
the first unwinding unit is provided with a first feeding speed a, and the slit paper unwinding unit is provided with a varying feeding speed b, wherein the varying feeding speed b includes a second feeding speed b1, a third feeding speed b2 and a fourth feeding speed b3, the third feeding speed b2 being the same as the first feeding speed b, the second feeding speed b1 being less than the first feeding speed a, the fourth feeding speed b3 being greater than the first feeding speed b;
when the first end of the slit paper after cutting is located at an end location of the interval S, the slit paper unwinding unit feeds the slit paper at the third feeding speed b2, so that the slit paper and the first sheet are fed synchronously; when the second end of the slit paper after cutting is fed to a location between two adjacent intervals S, the slit paper unwinding unit feeds the slit paper at the fourth speed b3, and the first end of the slit paper fed at the fourth feeding speed b3 overlaps with the second end of the previous slit paper after cutting; after the slit papers overlap, the slit paper unwinding unit continues to feed the slit paper at the third feeding speed b2 until the second end of the next slit paper after cutting is located at a starting location of another adjacent interval S, and then the slit paper unwinding unit feeds the slit paper at the second feeding speed b1, so that the second end of the next slit paper is located at an end location of the interval S relative to the first sheet, and the slit paper unwinding unit feeds again the slit paper at the third feeding speed b2, thereby forming two partially overlapping slit papers in the two adjacent intervals S of the first sheet.

18. A packaging bag manufacturing device, comprising two second buffer sheet manufacturing modules according to claim 17, wherein the two second buffer sheet manufacturing modules manufacture the two buffer sheets, and the two buffer sheets are fed synchronously in a manner that the third sheets are opposite to each other and are pressed and bonded together at the interval S.
